# EUROPEAN PATENT SPECIFICATION

(11) **EP 2 878 980 B1**
(45) Date of publication and mention of the grant of the patent: **27.02.2019**
(21) Application number: 13194668.3
(22) Date of filing: 27.11.2013
(51) Int. Cl.: G02B 6/42

(54) **Device for aligning and fastening an optical fiber coupled to an opto-electronic component**
Vorrichtung zur Ausrichtung und Befestigung einer an eine optoelektronische Komponente gekoppelten Glasfaser
Dispositif pour aligner et fixer une fibre optique couplée à un composant opto-électronique

(43) Date of publication of application: 03.06.2015
(73) Proprietor: Alcatel Lucent, 91620 Nozay (FR)
(72) Inventor: Goix, Michel, 91460 Marcoussis (FR)
(74) Representative: Browne, Robin Forsythe

(56) References cited:
- GB-A- 2 128 768
- US-A- 5 985 086
- US-A- 6 074 103
- US-A1- 2003 012 522
- US-A1- 2007 140 628
- US-B1- 7 309 175

## Description

### TECHNICAL FIELD

The present invention pertains to a device for aligning the optical axis of an optical fiber with the optical axis of an opto-electronic component and for fastening the optical fiber into a coupling position with the opto-electronic component. This device also applies to situations in which the opto-electronic component is coupled to multiple optical fibers.

### BACKGROUND

The active opto-electronic components concerned by the invention might be light-producing or light-detecting components which may be coupled to conductors of integrated circuits. The opto-electronic component may particularly be a semiconductor component, a laser diode, a light-emitting diode, a photodiode, or a phototransistor, for example. In order to associate this opto-electronic component with an optical fiber with optimal coupling, it is necessary to align the optical axis of the optical fiber on the optical axis of the opto-electronic component with extreme accuracy. However, due to the very small dimensions of the opto-electronic components, adjusting the alignment of the optical axes of the optical fiber and opto-electronic component is a very delicate operation, because in some cases it requires accuracy on the order of or less than 1 µm in all three axes. This is why this alignment is generally adjusted dynamically, and the optical fiber moved with a micromanipulator is adjusted in position, with the opto-electronic device being operating.

The quality of the resulting coupling, meaning the ratio of the signal transferred by the coupling over the signal transmitted by the input optical fiber in the event of input coupling, is higher if the positioning of the end of the optical fiber relative to the opto-electronic component is well-adjusted. In practice, this requires very accurate positioning of the optical fiber relative to the opto-electronic component. The position of the optical fiber relative to the opto-electronic component must then remain optimal while fastening the optical fiber onto its mount.

One known method consists of moving the optical fiber, placed facing the opto-electronic component, within a solidifiable product. This solidifiable product is either melted soft solder, or polymerizing glue. The position of the optical fiber is adjusted until the maximum transferred signal is obtained, then the product is solidified when optimal coupling is reached; in this matter, it is fastened into an appropriate position. The drawback of this method is that while the product is solidifying, forces of contraction are dissymmetrids and move the optical fiber and may sometimes even break it. In order to keep from reducing the coupling, the movement caused by the shrinkage is anticipated when positioning the optical fiber relative to the opto-electronic component. Nonetheless, shrinkage is not always foreseeable, and the resulting alignment does not have the required accuracy. Patent documents US2007/0140628, GB 2 128 768 and US6,074,103 disclose devices for aligning the optical axes of an optical fiber and an opto-electronic component.

### SUMMARY

The coupling of an optical fiber with an opto-electronic component is therefore not an easy task. This is because the alignment of the optical fiber with the opto-electronic component must be such that maximum light coupling exists between the opto-electronic component and the optical fiber. Furthermore, this coupling must be solid and maintain optimal alignment over time, despite changes in temperature and humidity. Furthermore, the coupling must tolerate handling, or even a decrease in the level of coupling.

The purpose of the present invention is to propose a device for accurately aligning and fastening the optical axis of an optical fiber with the optical axis of an opto-electronic component.

The present invention provides a device for aligning the optical axis of an optical fiber with the optical axis of an opto-electronic component and for fastening the optical fiber in the resulting relative position in relation to the opto-electronic component as defined in claim 1.

In other terms, the device comprises a framework formed with a small bore for the fiber location. The optical fiber is placed into the bore in order to align the optical axis of the optical fiber with the optical axis of the opto-electronic component. Then, the solidifying fastening means migrate from the tank to the bore by capillarity action. It could be noted that the solidifying fastening means are homogeneously distributed around the fiber. Thanks to this homogeny repartition, when the solidifying fastening means are solidified around the optical fiber, forces of contraction are symmetric so that the optical fiber does not move and the position is conserved. Thus, the optical fiber is fastened into an appropriate position.

In a not limited embodiment of the device according to the invention, the opto-electronic component is a multichannel opto-electronic component, the first framework comprising a plurality of bores, a plurality of tanks, and a plurality of ducts, each bore having a longitudinal axis sensibly coaxial to one of the optical axis of the multichannel opto-electronic component and each duct being connected at a first end to a tank and at a second end to a bore.

In a not limited embodiment of the device according to the invention, the device comprises a second framework disposed onto said base comprising a bore having a longitudinal axis sensibly coaxial to the optical axis of the opto-electronic component, said bore being construed and arranged to receive the optical fiber.

In a not limited embodiment of the device according to the invention, the second framework disposed onto said base comprises a plurality of bores, each bore of said second framework having a longitudinal axis sensibly coaxial to one of the optical axis of the multichannel opto-electronic component.

In a not limited embodiment of the device according to the invention, the second framework disposed onto said base comprises:
- a plurality of tank construed and arranged to contain solidifiable fastening means, and
- a plurality of duct, each duct of said second framework being connected at a first end to a tank and at a second end to a bore so that solidifiable fastening means are capable to migrate from a tank to a bore by capillarity action.

In a not limited embodiment of the device according to the invention, the second framework comprises:
- a tank construed and arranged to contain solidifiable fastening means, and
- a duct connected at a first end to said tank and at a second end to said bore so that solidifiable fastening means are capable to migrate from the tank to the bore by capillarity action.

In a not limited embodiment of the device according to the invention, the base comprises a first groove arranged and construed to receive and position the first framework.

In a not limited embodiment of the device according to the invention, the base comprises a second groove arranged and construed to received and position the second framework.

In a not limited embodiment of the device according to the invention, the bore is cylindrical.

In a not limited embodiment of the device according to the invention, the duct diameter is smaller than the bore diameter.

In a not limited embodiment of the device according to the invention, the bore diameter is 20 µm up 60 µm higher than the optical fiber diameter received.

In a not limited embodiment of the device according to the invention, the duct diameter is comprised between 70 µm and 130 µm.

In a not limited embodiment of the device according to the invention, solidifiable fastening means are melted soft solder or polymerizing glue.

In a not limited embodiment of the device according to the invention, the thickness of the first and/or second framework is comprised between 100 µm and 300 µm, for example 127 µm.

### BRIEF DESCRIPTION

Other characteristics and advantages of the present invention will become apparent upon reading the following description of embodiments, which are naturally given by way of non-limiting examples, and in the attached drawing, in which:
- Figure 1 is a schematic view showing a first embodiment of the device for aligning an optical fiber relative to an opto-electronic component, the first embodiment not forming part of the present invention.
- Figure 2 is a schematic view showing a second embodiment of the device for aligning an optical fiber relative to an opto-electronic component according to the invention,
- Figure 3 is a schematic view showing a third embodiment of the device for aligning an optical fiber relative to an opto-electronic component according to the invention,
- Figure 4 is a schematic view showing a fourth embodiment of the device for aligning an optical fiber relative to an opto-electronic component according to the invention,
- Figure 5 is a schematic view showing a fifth embodiment of the device for aligning an optical fiber relative to an opto-electronic component according to the invention.
- Figure 6 is a schematic view showing a sixth embodiment of the device for aligning an optical fiber relative to an opto-electronic component according to the invention.

The same references are used in different figures to designate same elements.

### DETAILED DESCRIPTION

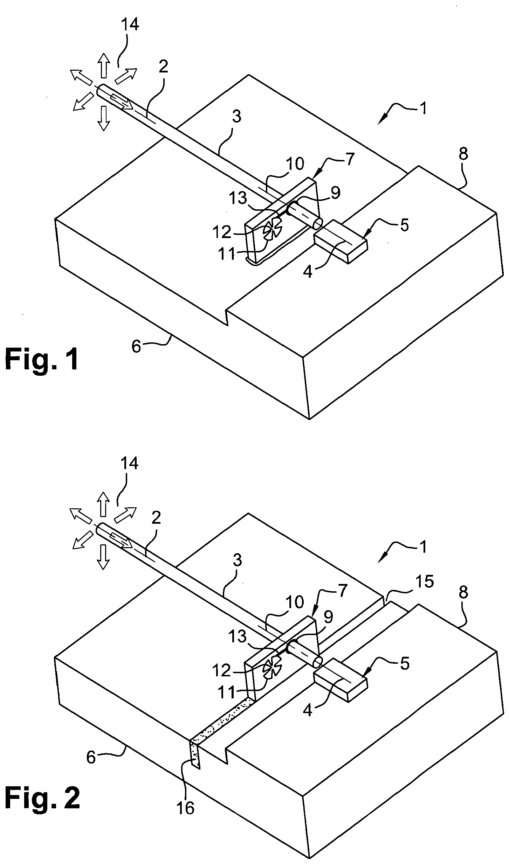

Figure 1 depicts a first not limited embodiment of a device 1 for aligning the optical axis 2 of an optical fiber 3 with the optical axis 4 of an opto-electronic component 5 and for fastening the optical fiber 3 in the resulting relative position in relation to the opto-electronic component 5, the first embodiment not forming part of the present invention.

The device 1 comprises a base 6 construed and arranged to support a first framework 7. In this not limited example, the base 6 comprises a mount 8 arranged and construed to support the opto-electronic component 5.

The first framework 7 is disposed onto the base 6 and comprises a bore 9 having a longitudinal axis 10 sensibly coaxial to the optical axis 4 of the opto-electronic component 5. The coaxiality between the bore axis 10 and the optical axis 4 of the opto-electronic component 5 being obtained, using of a microscope, during the positioning and fastening of the framework 7 onto the base 6. The first framework 7 may be fixed with the base 6 by welding.

In a not limited embodiment, the first framework 7 is rigid, for example the material of the first framework 7 is aluminia. For example, the framework thickness T7 is 1 mm.

The first framework 7 further comprises at least a tank 11 construed and arranged to contain solidifiable fastening means 12.

In the not limited example illustrated in figure 1, the tank 11 is cylindrical and presents four lugs. These lugs participate to the maintaining of the solidifiable fastening means 12. The tank is not limited to this example and may present another shape. However, the determined shape must permit to contain and maintain the solidifiable fastening means 12.

In a not limited embodiment, solidifiable fastening means 12 are formed by melted soft solder or polymerizing glue.

The first framework 7 also comprises a duct 13 connected at a first end to the tank 11 and at a second end to the bore 9 so that solidifiable fastening means 12 migrate from the tank 11 to the bore 9 by capillarity action. In order to realize the capillarity action, the duct diameter is smaller than the bore diameter. For example, the duct diameter is comprised between 70 µm and 130 µm.

Thus, when the optical fiber 3 is positioned into the bore 9, the position of the optical fiber 3 is adjusted in all directions 14 until the maximum transferred signal is obtained, i.e. the longitudinal axis 2 of the optical fiber 3 is aligned with the optical axis 4 of the opto-electronic component 5 to be coaxial. This alignment may be adjusted by microscope or dynamically by moving the optical fiber 3 with a micromanipulator while the opto-electronic component 5 is operating.

Then, when the position of the optical fiber 3 wherein the maximum transferred signal is obtained is determined, the solidifiable fastening means 12 migrate from the tank 11 to the bore 9 by capillarity action.
In a not limited embodiment, the bore 9 is cylindrical and the diameter of the bore 9 is 20 µm up 60 µm higher than the diameter of optical fiber 3. This dimension difference between the optical fiber diameter and the bore diameter allows a homogeneous repartition of the solidifying fastening means 12 around the optical fiber 3. Thus, during the migration of the fastening means 12, the position of the optical fiber 3 is not modified and the position wherein the maximum transferred signal is obtained is conserved. Even if the optical fiber 3 is slightly moved, as the fastening means 12 are not solidified yet, the position of the optical fiber 3 can be adjusted.

Then, the solidifying fastening means 12 are solidified by U.V. exposure or heating. During the solidification, forces of contraction of the fastening means 12 are symmetric so that the optical fiber 3 does not move and the position is conserved. The forces are symmetric because the optical fiber 3 is 360 degree surrounded by the solidifiable fastening means 12. Thus, the optical fiber position wherein the maximum transferred signal is obtained is conserved.

Figure 2 depicts a second not limited embodiment of a device 1 for aligning the optical axis 2 of an optical fiber 3 with the optical axis 4 of an opto-electronic component 5 and for fastening the optical fiber 3 in the resulting relative position in relation to the opto-electronic component 5.

In this second embodiment, the base 6 comprises a first groove 15 arranged and construed to receive and position the first framework 7 so that the bore axis 10 is sensibly coaxial with the optical axis 4 of the opto-electronic component 5. The groove 15 is for example perpendicular to the optical axis 4. In order to position the first framework 7 correctly, the first framework 7 is slided into the groove 15 until that the bore axis 10 is coaxial with the optical axis 4 of the opto-electronic component.

In a not limited embodiment, the first framework position is fixed by welding or gluing 16.

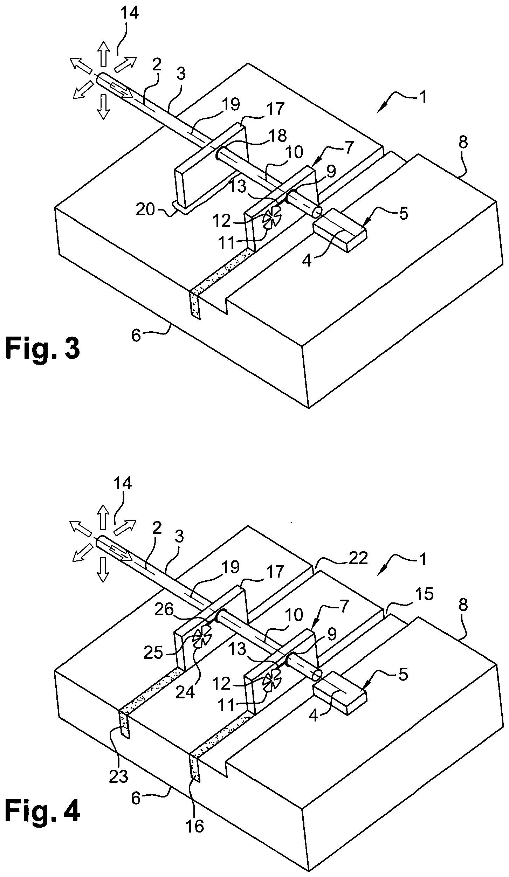

Figure 3 depicts a third not limited embodiment of a device 1 for aligning the optical axis 2 of an optical fiber 3 with the optical axis 4 of an opto-electronic component 5 and for fastening the optical fiber 3 in the resulting relative position in relation to the opto-electronic component 5.

In this third embodiment, the device 1 further comprises a second framework 17 disposed onto the base 6. The second framework 17 comprises a bore 18 having a longitudinal axis 19 sensibly coaxial with the optical axis 4 of the opto-electronic component 4. The coaxiality between the longitudinal bore axis 19 and the optical axis 4 of the opto-electronic component 5 being obtained by using of a microscope. The bore 18 is construed and arranged to receive the optical fiber 3. It could be noted that the bore diameter is 20 µm up 60 µm higher than the optical fiber 3 diameter. This feature allows do not exert a mechanical stress on the optical fiber 3.

The second framework 17 is disposed onto the base 6 and may be fixed with the base 6, for example, by welding or by gluing 20.

In another embodiment not illustrated, the second framework 17 comprises a slot above the bore 18. This slot may be used to place solidifiable fastening means. Then, these solidifiable fastening means migrate by gravity for surround the optical fiber 3.

In another embodiment not depicted, the base 6 comprises a second groove arranged and construed to receive and position the second framework 17 so that the longitudinal bore axis19 is sensibly coaxial with the optical axis 4 of the opto-electronic component 5. The second groove is for example perpendicular to the optical axis 4. In order to position the second framework 17 correctly, the second framework 17 is slided into the second groove until that the longitudinal bore axis 19 is coaxial with the optical axis 4.

In a not limited embodiment, the second framework position is fixed into the groove non depicted, by welding or gluing.

In a not limited embodiment, the thickness T7 of the first framework 7 and the thickness T17 of the second framework 17 are each of them comprised between 100 µm and 300 µm, for example 127 µm.

In a general manner, it could be noted that when one uses only one framework as depicted in figure 1 the framework thickness is more important than when one uses two frameworks as depicted in figure 3.Figure 4 depicts a fourth not limited embodiment of a device 1 for aligning the optical axis 2 of an optical fiber 3 with the optical axis 4 of an opto-electronic component 5 and for fastening the optical fiber 3 in the resulting relative position in relation to the opto-electronic component 5.

In this embodiment, the base 6 comprises a second groove 22 and the second framework 17 is located into the second groove 22. Furthermore, the second framework 17 is fixed to the base 6, for example, by gluing 23.

Besides, in this not limited embodiment, the second framework 17 comprises a tank 24 construed and arranged to contain solidifiable fastening means 25. In a not limited example, solidifiable fastening means 25 are formed by melted soft solder or polymerizing glue.

The second framework 17 also comprises a duct 26 connected at a first end to the tank 24 and at a second end to the bore 18 so that solidifiable fastening means 25 migrate from the tank 24 to the bore 18 by capillarity action. In order to facilitate the capillarity action, the duct diameter is smaller than the bore diameter. For example, the duct diameter is comprised between 70 µm and 130 µm.

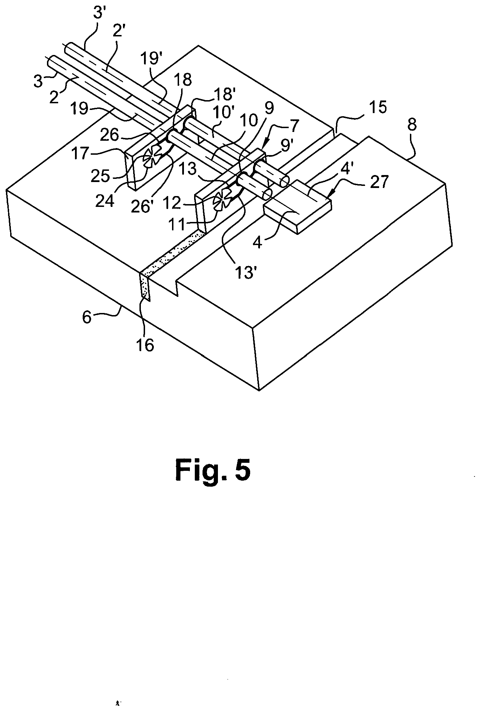

Figure 5 depicts a fifth not limited embodiment of a device 1 for aligning optical axis 2, 2' of two optical fibers 3, 3' with the two optical axis 4, 4' of a multichannel opto-electronic component 27 and for fastening each optical fiber 3, 3' in the resulting relative position in relation to the multichannel opto-electronic component 27.

In this fifth not limited embodiment, the first framework 7 comprises two bores 9 9', a unique tank 11 and two ducts 13, 13'.

The first bore 9 has a longitudinal axis 10 sensibly coaxial to the first optical axis 4 of the multichannel opto-electronic component 27.

The second bore 9' has a longitudinal axis 10' sensibly coaxial to the second optical axis 4' of the multichannel opto-electronic component 27.

The first duct 13 is connected at a first end to the tank 11 and at a second end to the first bore 9.

The second duct 13' is connected at a first end to the tank 11 and at a second end to the second bore 9'.

Futhermore, the second framework 17 comprises two bores 18, 18', a unique tank 24 and two ducts 26, 26'.

The first bore 18 has a longitudinal axis 19 sensibly coaxial to the first optical axis 4 of the multichannel opto-electronic component 27.

The second bore 18' has a longitudinal axis 19' sensibly coaxial to the second optical axis 4' of the multichannel opto-electronic component 27.

The first duct 26 is connected at a first end to the tank 24 and at a second end to the first bore 18.

The second duct 26' is connected at a first end to the tank 24 and at a second end to the second bore 18'.

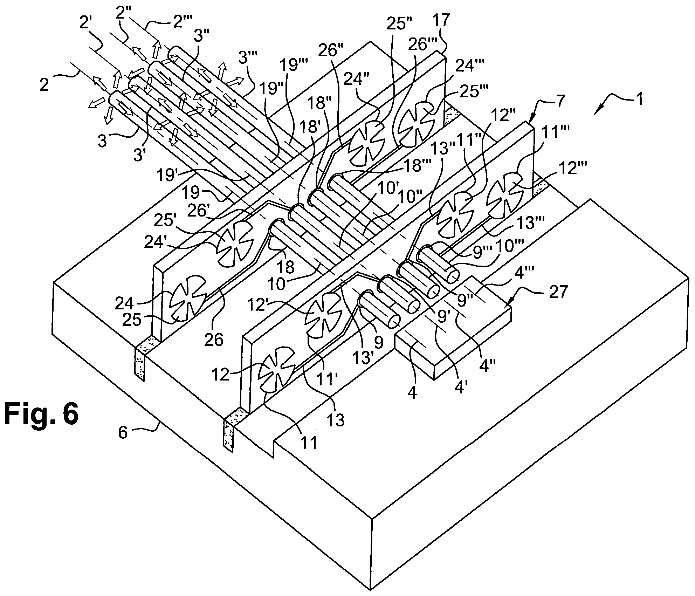

Figure 6 depicts a sixth not limited embodiment of a device 1 for aligning four optical axis 2, 2', 2", 2'" of four optical fibers 3, 3', 3", 3'" with the four optical axis 4, 4', 4", 4'" of a multichannel opto-electronic component 27 and for fastening the four optical fibers 3, 3', 3", 3'" in the resulting relative position in relation to the multichannel opto-electronic component 27.

In this sixth not limited embodiment, the first framework 7 comprises a plurality of bores 9, 9', 9", 9"', a plurality of tank 11, 11', 11", 11'", and a plurality of duct 13, 13', 13", 13"', each bore 9, 9', 9", 9'" having a longitudinal axis 10, 10', 10", 10'" sensibly coaxial to one of the optical axis 4, 4', 4", 4'" of the multichannel opto-electronic component 26 and each duct 13, 13', 13", 13'" being connected at a first end to a tank 11, 11', 11", 11"' and at a second end to a bore 9, 9', 9", 9"'.

In this embodiment, the second framework 17 comprises a plurality of bores 18, 18', 18", 18"', a plurality of tank 24, 24', 24", 24"', and a plurality of duct 26, 26', 26", 26"', each bore 18, 18', 18", 18"', having a longitudinal axis 19, 19', 19", 19'" sensibly coaxial to one of the optical axis 4, 4', 4", 4'" of the multichannel opto-electronic component 27 and each duct 26, 26', 26", 26'" being connected at a first end to a tank 24, 24', 24", 24"', and at a second end to a bore 18, 18', 18", 18'".

More particularly, the first framework 7 comprises four bores 9, 9', 9", 9"', four tanks 11, 11', 11", 11'" and four ducts 13, 13', 13", 13"'.

The first bore 9 has a longitudinal axis 10 sensibly coaxial to the first optical axis 4 of the multichannel opto-electronic component 27.

The second bore 9' has a longitudinal axis 10' sensibly coaxial to the second optical axis 4' of the multichannel opto-electronic component 27.

The third bore 9" has a longitudinal axis 10" sensibly coaxial to the third optical axis 4" of the multichannel opto-electronic component 27.

The fourth bore 9"' has a longitudinal axis 10"' sensibly coaxial to the fourth optical axis 4'" of the multichannel opto-electronic component 27.

The first duct 13 is connected at a first end to the first tank 11 and at a second end to the first bore 9.

The second duct 13' is connected at a first end to the second tank 11' and at a second end to the second bore 9'.

The third duct 13" is connected at a first end to the third tank 11" and at a second end to the third bore 9.

The fourth duct 13'" is connected at a first end to the fourth tank 11'" and at a second end to the fourth bore 9"'.

Futhermore, the second framework 17 comprises four bores 18, 18', 18", 18"', four tanks 24, 24', 24", 24'" and four ducts 26, 26', 26", 26"'.

The first bore 18 has a longitudinal axis 19 sensibly coaxial to the first optical axis 4 of the multichannel opto-electronic component 27.

The second bore 18' has a longitudinal axis 19' sensibly coaxial to the second optical axis 4' of the multichannel opto-electronic component 27.

The third bore 18" has a longitudinal axis 19" sensibly coaxial to the third optical axis 4" of the multichannel opto-electronic component 27.

The fourth bore 18'" has a longitudinal axis 19'" sensibly coaxial to the fourth optical axis 4'" of the multichannel opto-electronic component 27.

The first duct 26 is connected at a first end to the first tank 24 and at a second end to the first bore 18.

The second duct 26' is connected at a first end to the second tank 24' and at a second end to the second bore 18'.

The third duct 26" is connected at a first end to the third tank 24" and at a second end to the third bore 18.

The fourth duct 26'" is connected at a first end to the fourth tank 24'" and at a second end to the fourth bore 18"'.

Naturally, the present invention is not limited to the described embodiments, but rather is subject to many variants accessible to the person skilled in the art without departing from the invention. In particular, without departing from the invention, it is possible to conceive the usage of solidifiable fastening means of different structures and natures. Besides, without departing from the invention, it is possible to conceive a base and/or framework with different shape.

## Claims

1. A device (1) for aligning the optical axis (2) of an optical fiber (3) with the optical axis (4) of an opto-electronic component (5) and for fastening the optical fiber (3) in the resulting relative position in relation to the opto-electronic component (5), said device (1) comprising:
- an opto-electronic component (5) comprising an optical axis (4),
- a base (6) construed and arranged to support a framework, comprising a groove (15),
- a first framework (7) disposed onto said base (6) comprising:
- a bore (9) being construed and arranged to receive an optical fiber (3), the first framework (7) being allowed to slide into said groove (15) so that the longitudinal axis (10) of said bore (9) is coaxial with the optical axis (4) of the opto-electronic component (5),
- a tank (11) construed and arranged to contain solidifiable fastening means (12), and
- a duct (13) connected at a first end to said tank (11) and at a second end to said bore (9) so that solidifiable fastening means (12) are capable to migrate from the tank (11) to the bore (9) by capillarity action.

2. A device (1) according to claim 1, wherein the opto-electronic component is a multichannel opto-electronic component (27), the first framework (7) comprising a plurality of bores (9, 9', 9", 9"'), a plurality of tank (11, 11', 11", 11'"), and a plurality of duct (13, 13', 13", 13"'), each bore (9, 9', 9", 9"') having a longitudinal axis (10, 10', 10", 10'") sensibly coaxial to one of the optical axis (4, 4', 4", 4'") of the multichannel opto-electronic component (27) and each duct (13, 13', 13", 13'") being connected at a first end to a tank (11, 11', 11", 11"') and at a second end to a bore (9, 9', 9", 9"').

3. A device (1) according to the claim 1, further comprising a second framework (17) disposed onto said base (6) comprising a bore (18) having a longitudinal axis (19) sensibly coaxial to the optical axis (4) of the opto-electronic component (5), said bore (18) being construed and arranged to receive the optical fiber (3).

4. A device (1) according to claim 2 and 3, wherein the second framework (17) disposed onto said base (6) comprises a plurality of bores (18, 18', 18", 18'"), each bore (18, 18', 18", 18'") of said second framework (17) having a longitudinal axis (19, 19', 19", 19'") sensibly coaxial to one of the optical axis (4, 4', 4", 4'") of the multichannel opto-electronic component (27).

5. A device (1) according to the claim 4, wherein the second framework (17) disposed onto said base (6) comprises:
- a plurality of tank (24, 24', 24", 24'") construed and arranged to contain solidifiable fastening means (25, 25', 25", 25'"), and
- a plurality of duct (26, 26', 26", 26'"), each duct (26, 26', 26", 26'") of said second framework (17) being connected at a first end to a tank (24, 24', 24", 24'") and at a second end to a bore (18, 18', 18", 18"').

6. A device (1) according to claim 3, wherein the second framework (17) comprises:
- a tank (24) construed and arranged to contain solidifiable fastening means (25), and
- a duct (26) connected at a first end to said tank (24) and at a second end to said bore (18) so that solidifiable fastening means (25) are capable to migrate from the tank (24) to the bore (18) by capillarity action.

7. A device (1) according to any of the claims 3 to 6, wherein the base (6) comprises a second groove (22) arranged and construed to receive and position the second framework (17).

8. A device (1) according to any of the preceding claims, wherein the base (6) comprises a first groove (15) arranged and construed to receive and position the first framework (7).

9. A device (1) according to any one of the preceding claims, wherein the bore (9, 9', 9", 9"', 18, 18', 18", 18"') is cylindrical.

10. A device (1) according to claim 9, wherein the duct diameter is smaller than the bore diameter.

11. A device (1) according to any one of the claims 9 or 10, wherein the bore diameter is 20 µm up to 60 µm higher than the optical fiber diameter received.

12. A device (1) according to any one of the preceding claims, wherein the duct diameter is comprised between 70 µm and 130 µm.

13. A device (1) according to any one of the preceding claims, wherein solidifiable fastening means (12, 12', 12", 12'", 25, 25', 25", 25'") are melted soft solder or polymerizing glue.

14. A device (1) according to any one of the preceding claims, wherein the thickness (T7, T17) of the first and/or second framework is comprised between 100 µm and 300 µm.

15. A device (1) according to any one of the preceding claims, wherein the thickness (T7, T17) of the first and/or second framework is 127 µm.

## Patentansprüche

1. Einrichtung (1) zum Ausrichten der optischen Achse (2) eines Lichtleiters (3) mit der optischen Achse (4) einer opto-elektronischen Komponente (5) und zum Befestigen des Lichtleiters (3) in der resultierenden relativen Position in Relation zu der opto-elektronischen Komponente (5), wobei die Einrichtung (1) Folgendes aufweist:
- eine opto-elektronische Komponente (5), die eine optische Achse (4) aufweist,
- eine Basis (6), die derart aufgebaut und angeordnet ist, dass sie einen Rahmen trägt, der eine Nut (15) aufweist,
- einen ersten Rahmen (7), der an der Basis (6) angebracht ist und Folgendes aufweist:
- eine Bohrung (9), die derart ausgebildet und angeordnet ist, dass sie einen Lichtleiter (3) aufnimmt, wobei der erste Rahmen (7) in die Nut (15) hineingleiten kann, so dass die Längsachse (10) der Bohrung (9) koaxial mit der optischen Achse (4) der opto-elektronischen Komponente (5) ist,
- einen Tank (11), der derart aufgebaut und angeordnet ist, dass er ein verfestigbares Befestigungsmittel (12) enthält, und
- eine Leitung (13), die an einem ersten Ende mit dem Tank (11) und an einem zweiten Ende mit der Bohrung (9) verbunden ist, so dass das verfestigbare Befestigungsmittel (12) in der Lage ist, durch eine Kapillarwirkung aus dem Tank (11) in die Bohrung (9) zu wandern.

2. Einrichtung (1) nach Anspruch 1,
wobei die opto-elektronische Komponente eine opto-elektronische Mehrkanal-Komponente (27) ist, wobei der erste Rahmen (7) eine Vielzahl von Bohrungen (9, 9', 9",9"'), eine Vielzahl von Tanks (11, 11', 11", 11'") und eine Vielzahl von Leitungen (13, 13', 13", 13'") aufweist, wobei jede Bohrung (9, 9', 9", 9"') eine Längsachse (10, 10', 10", 10"') besitzt, die im Wesentlichen koaxial mit der einen optischen Achse (4, 4', 4", 4"') der opto-elektronischen Mehrkanal-Komponente (27) verläuft und jede Leitung (13, 13', 13", 13'") an einem ersten Ende mit einem Tank (11, 11', 11", 11'") und an einem zweiten Ende mit einer Bohrung (9, 9', 9", 9"') verbunden ist.

3. Einrichtung (1) nach Anspruch 1,
die ferner einen zweiten Rahmen (17) aufweist, der an der Basis (6) angebracht ist und eine Bohrung (18) aufweist, die eine Längsachse (19) besitzt, die im Wesentlichen koaxial mit der optischen Achse der opto-elektronischen Komponente (5) verläuft, wobei die Bohrung (18) derart ausgebildet und angeordnet ist, dass sie den Lichtleiter (3) aufnimmt.

4. Einrichtung (1) nach Anspruch 2 und 3,
wobei der zweite Rahmen (17), der an der Basis (6) angebracht ist, eine Vielzahl von Bohrungen (18, 18', 18", 18"') aufweist, wobei jede Bohrung (18, 18', 18", 18"') des zweiten Rahmens (17) eine Längsachse (19, 19', 19", 19"') besitzt, die im Wesentlichen koaxial mit einer der optischen Achsen (4, 4', 4", 4'") der opto-elektronischen Mehrkanal-Komponente (27) ist.

5. Einrichtung (1) nach Anspruch 4,
wobei der zweite Rahmen (17), der an der Basis (6) angebracht ist, Folgendes aufweist:
- eine Vielzahl von Tanks (24, 24', 24", 24'"), die derart aufgebaut und angeordnet sind, dass sie ein verfestigbares Befestigungsmittel (25, 25', 25", 25"') enthalten, und
- eine Vielzahl von Leitungen (26, 26', 26", 26"'), wobei jede Leitung (26, 26', 26", 26"') des zweiten Rahmens (17) an einem ersten Ende mit einem Tank (24, 24', 24", 24'") und an einem zweiten Ende mit einer Bohrung (18, 18', 18", 18"') verbunden ist.

6. Einrichtung (1) nach Anspruch 3,
wobei der zweite Rahmen (17) Folgendes aufweist:
- einen Tank (24), der derart aufgebaut und angeordnet ist, dass er ein verfestigbares Befestigungsmittel (25) enthält, und
- eine Leitung (26), die an einem ersten Ende mit dem Tank (24) und an einem zweiten Ende mit der Bohrung (18) verbunden ist, so dass ein verfestigbares Befestigungsmittel (25) in der Lage ist, durch eine Kapillarwirkung aus dem Tank (24) in die Bohrung (18) zu wandern.

7. Einrichtung (1) nach einem der Ansprüche 3 bis 6,
wobei die Basis (6) eine zweite Nut (22) aufweist, die derart angeordnet und ausgebildet ist, dass sie den zweiten Rahmen (17) aufnimmt und positioniert.

8. Einrichtung (1) nach einem der vorherigen Ansprüche,
wobei die Basis (6) eine erste Nut (15) aufweist, die derart angeordnet und aufgebaut ist, dass sie den ersten Rahmen (7) aufnimmt und positioniert.

9. Einrichtung (1) nach einem der vorherigen Ansprüche,
wobei die jeweilige Bohrung (9, 9', 9", 9"', 18, 18', 18", 18"') zylindrisch ist.

10. Einrichtung (1) nach Anspruch 9,
wobei der Durchmesser der Leitung kleiner ist als der Durchmesser der Bohrung.

11. Einrichtung (1) nach einem der Ansprüche 9 oder 10,
wobei der Durchmesser der Bohrung um 20 µm bis 60 µm größer ist als der Durchmesser des aufgenommenen Lichtleiters.

12. Einrichtung (1) nach einem der vorherigen Ansprüche,
wobei der Durchmesser der Leitung im Bereich zwischen 70 µm und 130 µm liegt.

13. Einrichtung (1) nach einem der vorherigen Ansprüche,
wobei das verfestigbare Befestigungsmittel (12, 12', 12", 12'", 25, 25', 25", 25"') ein geschmolzenes weiches Lot oder ein polymerisierender Klebstoff ist.

14. Einrichtung (1) nach einem der vorherigen Ansprüche,
wobei die Dicke (T7, T17) des ersten Rahmens und/oder des zweiten Rahmens im Bereich zwischen 100 µm und 300 µm liegt.

15. Einrichtung (1) nach einem der vorherigen Ansprüche,
wobei die Dicke (T7, T17) des ersten Rahmens und/oder des zweiten Rahmens 127 µm beträgt.

## Revendications

1. Dispositif d'alignement (1) de l'axe optique (2) d'une fibre optique (3) avec l'axe optique (4) d'un composant optoélectronique (5) et de fixation de la fibre optique (3) dans la position relative résultante par rapport au composant optoélectronique (5), ledit dispositif comprenant :
un composant optoélectronique (5) comprenant un axe optique (4) ;
une base (6) structurée et disposée pour soutenir un châssis, comprenant une rainure (15) ;
un premier châssis (7) disposé sur la base (6) comprenant :
un alésage (9) structuré et disposé pour recevoir une fibre optique (3), ledit premier châssis (7) étant coulissant dans ladite rainure (15) de sorte que l'axe longitudinal (10) dudit alésage (9) soit coaxial avec l'axe optique (4) du composant optoélectronique (5) ;
une cuve (11) structurée et disposée pour contenir un moyen de fixation solidifiable (12) ; et
un conduit (13) connecté à une première extrémité à ladite cuve (11) et connectée à une deuxième extrémité audit alésage (9) de sorte que le moyen de fixation solidifiable (12) est capable de migrer depuis la cuve (11) vers l'alésage par action capillaire.

2. Dispositif (1) selon la revendication 1, selon lequel le composant optoélectronique est un composant optoélectronique multicanal (27), le premier châssis (7) comprenant une pluralité d'alésages (9, 9', 9", 9'"), une pluralité de cuves (11, 11', 11", 11'"), et une pluralité de conduits (13, 13', 13", 13'"), chaque alésage présentant un axe longitudinal (10, 10', 10", 10'") sensiblement coaxial avec l'un des axes optiques du composant optoélectronique multicanal (27) et chaque conduit (13, 13', 13", 13'") étant connecté à une première extrémité à une cuve (11, 11', 11", 11"') et connecté à une deuxième extrémité à un alésage (9, 9', 9", 9"').

3. Dispositif (1) selon la revendication 1, comprenant en outre un deuxième châssis (17) disposé sur ladite base (6) comprenant un alésage (18) présentant un axe longitudinal (19) sensiblement coaxial avec avec l'axe optique (4) du composant optoélectronique (5), ledit alésage (18) étant structuré et disposé pour recevoir la fibre optique (3).

4. Dispositif (1) selon la revendication 2 ou la revendication 3, selon lequel le deuxième châssis (17) disposé sur ladite base (6) comprend une pluralité d'alésages (18, 18', 18", 18"'), chaque alésage (18, 18', 18", 18"') dudit deuxième châssis (17) présentant un axe longitudinal (19, 19', 19", 19"') sensiblement coaxial avec l'un des axes optiques (4, 4', 4", 4"') du composant optoélectronique multicanal (27).

5. Dispositif (1) selon la revendication 4, selon lequel le deuxième châssis (17) disposé sur ladite base (6) comprend :
une pluralité de cuves (24, 24', 24", 24'") structurée et disposée pour contenir un moyen de fixation solidifiable (25, 25', 25", 25"') ; et
une pluralité de conduits (26, 26', 26", 26"'), chaque conduit (26, 26', 26", 26"') dudit deuxième châssis (17) étant connecté à une première extrémité à une cuve (24, 24', 24", 24'"), et connecté à une deuxième extrémité à un alésage (18, 18', 18", 18"').

6. Dispositif (1) selon la revendication 3, selon lequel le deuxième châssis (17) comprend :
une cuve (24) structurée et disposée pour contenir un moyen de fixation solidifiable (25) ; et
un conduit (26) connecté à une première extrémité à ladite cuve (24) et connecté à une deuxième extrémité audit alésage (18) de sorte que le moyen de fixation solidifiable (25) soit capable de migrer depuis la cuve (24) vers l'alésage par action capillaire.

7. Dispositif (1) selon l'une quelconque des revendications 3 à 6, selon lequel la base (6) comprend une deuxième rainure (22) disposée et structurée pour recevoir et positionner ledit deuxième châssis (17).

8. Dispositif (1) selon l'une quelconque des revendications précédentes, selon lequel la base (6) comprend une première rainure (15) disposée et structurée pour recevoir et positionner le premier châssis (7).

9. Dispositif (1) selon l'une quelconque des revendications précédentes, selon lequel l'alésage (9, 9', 9", 9'", 18, 18', 18", 18"') est de forme cylindrique.

10. Dispositif (1) selon la revendication 9, selon lequel le diamètre du conduit est plus petit que celui de l'alésage.

11. Dispositif (1) selon l'une quelconque des revendications 9 ou 10, selon lequel le diamètre de l'alésage est supérieur, de 20 micromètres à 60 micromètres, au diamètre de fibre optique reçue dedans.

12. Dispositif (1) selon l'une quelconque des revendications précédentes, selon lequel le diamètre du conduit est compris entre 70 micromètres et 130 micromètres.

13. Dispositif (1) selon l'une quelconque des revendications précédentes, selon lequel le moyen de fixation solidifiable (12, 12', 12", 12"', 25, 25', 25", 25"') est une brasure tendre fondue, ou une colle polymérisable.

14. Dispositif (1) selon l'une quelconque des revendications précédentes, selon lequel l'épaisseur (T7, T17) du premier et/ou deuxième châssis est comprise entre 100 micromètres et 300 micromètres.

15. Dispositif (1) selon l'une quelconque des revendications précédentes, selon lequel l'épaisseur (T7, T17) du premier et/ou deuxième châssis est de 127 micromètres.
